# EUROPÄISCHE PATENTANMELDUNG

(11) **EP 1 391 248 A2**
(43) Veröffentlichungstag der Anmeldung: **25.02.2004**
(21) Anmeldenummer: 03018272.9
(22) Anmeldetag: 12.08.2003
(51) Int. Cl.: B05B 11/00, B65D 47/34, G01F 11/02

(54) **Dispenser für eine Flüssigkeit, insbesondere Flaschenaufsatzdispenser**

(30) Priorität: 23.08.2002 DE 10239554
(71) Anmelder: BRAND GMBH + CO KG, 97877 Wertheim (DE)
(72) Erfinder: Lutz, Walter, 97877 Wertheim (DE); Bopp, Bernd Udo, 63755 Alzenau (DE); Krank, Peter, 97877 Wertheim (DE)
(74) Vertreter: Gesthuysen, von Rohr & Eggert

(57) **Zusammenfassung**

Gegenstand der Erfindung ist ein Dispenser für eine Flüssigkeit, insbesondere Flaschenaufsatzdispenser, mit einer Zylinder-Kolben-Anordnung mit einem Meßzylinder (1) und einem darin abgedichtet verschiebbaren Kolben (2), mit einer mit dem Kolben (2) verbundenen Ventilanordnung (3) mit einem Einlaßventil (4) und einem Auslaßventil (5), jeweils versehen mit einem Ventilkörper (6) und einem Ventilsitz (7). Dieser ist dadurch gekennzeichnet, daß sämtliche von der Flüssigkeit berührten Teile oder Bereiche des Dispensers vollständig aus einem reinen thermoplastischen Kunststoff bestehen oder mit einem reinen thermoplastischen Kunststoff derart beschichtet sind, daß kein Kontakt der Flüssigkeit mit dem mit Kunststoff beschichteten Substrat oder Bestandteilen davon erfolgt.

## Beschreibung

Die Erfindung betrifft einen Dispenser für eine Flüssigkeit, insbesondere einen Flaschenaufsatzdispenser, mit den Merkmalen des Oberbegriffs von Anspruch 1.

Dispenser sind Abgabevorrichtungen zum Abgeben bestimmter Volumina einer Flüssigkeit. Man kennt insbesondere Flaschenaufsatzdispenser und Büretten. Ein Flaschenaufsatzdispenser kommt insbesondere zum Einsatz, um ein einstellbares Flüssigkeitsvolumen wiederholt aus einer Flasche, auf der der Dispenser aufgesetzt ist, auszugeben.

Bekannte Flaschenaufsatzdispenser sind auf eine Einhandbedienung ausgelegt. Bei Dispensern mit hoher Ansaugkraft wird zu diesem Zweck ein als Ansaugfeder bezeichnetes Federelement zwischen der Zylinder-Kolben-Anord-nung und deren Meßzylinder bzw. einem damit verbundenen Widerlager eingesetzt, so daß der Kolben zum Ansaugen von Flüssigkeit aus der Flasche im Meßzylinder unter Federkraft hochgefahren wird. Zum Ausstoßen der Flüssigkeit über das Auslaßventil wird der Kolben von Hand entgegen der Wirkung der Ansaugfeder wieder eingefahren und dabei die Ansaugfeder für den nächsten Saughub gespannt. Es gibt natürlich auch Dispenser, bei denen keine Ansaugfeder vorgesehen ist, sondern eine Bedienung in beiden Bedienungsrichtungen nur von Hand erfolgt. Schließlich gibt es auch motorisch betriebene Dispenser.

Normalerweise weist ein Dispenser neben der Zylinder-Kolben-Anordnung und der Ventilanordnung mit Einlaßventil und Auslaßventil verschiedene weitere Bauteile auf, insbesondere ein mit dem Kolben verbundenes Handhabungsgehäuse und/oder eine Volumeneinstellung und/oder einen die Ventilsitze der Ventile umfassenden Ventilkorpus und/oder ein Außengehäuse der Ventilanordnung und/oder eine vom Einlaßventil in die Flasche verlaufende Ansaugleitung und/oder eine vom Auslaßventil zu einer Auslaßstelle führende Ausstoßleitung. Insgesamt darf dazu beispielhaft auf einen Flaschenaufsatzdispenser der Anmelderin verwiesen werden (DE 197 02 773 A1; Prospekt BRAND "seripettor", 9943 61, 21/0898, der BRAND GMBH + CO Fabrik für Laborgeräte).

Bekannt sind derartige Dispenser von verschiedenen Anbietern (z.B. von der Firma Barnstaed International "REPIPET" Dispenser, Produktdatenblatt LT 388X 6/4/30/02; ProLiquid "Minidispenser", Produktdatenblatt 2000 der ProLiquid GmbH, 88662 Überlingen).

Die bekannten, zuvor angesprochenen Dispenser bestehen bereits in den von der Flüssigkeit berührten Teilen oder Bereichen überwiegend aus Kunststoff, und zwar beispielsweise aus Polypropylen (PP), aber auch aus Polytetrafluorethylen (PTFE) für einzelne Bestandteile (Prospekt Barnstaed "REPIPET" a.a.O.). Die Bestandteile der Ventile bestehen allerdings stets aus elastomerhaltigem Material, insbesondere Ethylen-Propylen-Elastomeren.

Für sich ist es bereits bekannt geworden, die bei Dispensern vorgesehenen Ventile aus Polytetrafluorethylen (PTFE) oder ähnlichen Materialien bestehenden oder solche Materialien aufweisenden Kunststoffen herzustellen. Diese Ventile haben eine höhere Chemikalienresistenz als Elastomer-Ventile und sind wesentlich preisgünstiger als Ventile mit einer Glas-/ Keramikpaarung.

Glas und Keramik enthalten generell Metalloxide. Dasselbe gilt für Elastomere. Insbesondere in der Spurenanalytik kommen Reagenzien zur Anwendung, die Metalloxide eluieren, insbesondere bestimmte Säuren. Auch chemisch gebundene Metalloxide etc. werden daher freigesetzt und sind in der Spurenanalytik dementsprechend störend. Metalloxide treten auch in Farb-, Verstärkungs- und Füllstoffen für Kunststoffe, sowie in Verarbeitungshilfsmitteln auf.

Der Lehre liegt die Problemstellung zugrunde, einen Dispenser für eine Flüssigkeit anzugeben, der besonders zweckmäßig, auch in der Spurenanalytik, und für ein breites Feld von Anwendungen einsetzbar ist.

Die Lehre der vorliegenden Erfindung löst die zuvor erläuterte Problemstellung bei einem Dispenser mit den Merkmalen des Oberbegriffs von Anspruch 1 durch die Merkmale des kennzeichnenden Teils von Anspruch 1.

Sämtliche von der Flüssigkeit berührten Teile oder Bereiche des Dispensers bestehen vollständig aus einem reinen thermoplastischen Kunststoff. Als ein reiner thermoplastischer Kunststoff ist ein solcher zu bezeichnen, der nicht mit anderen Kunststoffen oder Bestandteilen vermischt ist. Zumindest, sofern das für den beabsichtigten Anwendungszweck ausreicht, sind sämtliche von der Flüssigkeit berührten Teile oder Bereiche des Dispensers mit einem solchen Kunststoff beschichtet derart, daß kein Kontakt der Flüssigkeit mit dem von Kunststoff beschichteten Substrat oder Bestandteilen davon erfolgt. Kein Kontakt meint einerseits keine Berührung im engeren Sinne, andererseits aber auch Vermeidung einer störenden Diffusion von Bestandteilen des Substrats in die Flüssigkeit durch eine Kunststoffbeschichtung hindurch.

Bevorzugte Ausgestaltungen und Weiterbildungen sind Gegenstand der Unteransprüche.

Besondere Bedeutung kommt dabei der Ausgestaltung zu, daß der Kunststoff bzw. die Kunststoffe frei von anorganischen Inhaltsstoffen ist bzw. sind. Anorganische Inhaltsstoffe in diesem Sinne sind insbesondere die bereits oben erwähnten Metalloxide, die insbesondere für die Spurenanalytik Probleme aufwerfen. Ein reiner thermoplastischer Kunststoff, der frei von anorganischen Inhaltsstoffen ist, ist insoweit das perfekte Material zur Herstellung eines für die Spurenanalytik im besonderen Maße geeigneten Dispensers.

Weitere und für sich besondere Bedeutung kommt ferner der Maßnahme zu, daß zumindest die von der Flüssigkeit berührten Teile oder Bereiche des Dispensers als Spritzguß-Formteile ausgeführt sind. Das ist herstellungstechnisch von besonderem Vorteil für die ergebenden Möglichkeiten der konstruktiven Ausgestaltung und für die wirtschaftliche Fertigung. Auch wirken sich die geschlossenen Oberflächen von spritzgegossenen Teilen effektiv für die Reinigung oder Spülung des Dispensers aus. Ebenso wird bei diesem Herstellungsprozess eine hohe Abformgenauigkeit der Teile für die Zylinder-Kolben-Anordnung erzielt, die Volumengenauigkeit der abzugebenden Dosierflüssigkeit maßgeblich beeinflussen.

Schließlich kommt eine weitere und eigenständige Bedeutung auch der Maßnahme zu, daß der Meßzylinder eine Abstufung zu einem geringfügig größeren Durchmesser aufweist und der Kolben mit seiner Dichtstelle zum Autoklavieren über diese Abstufung hinaus verstellbar ist, so daß die Dichtstelle des Kolbens im Bereich des größeren Durchmessers des Meßzylinders liegt. Mit dieser Maßnahme wird erreicht, daß auch bei einem aus Kunststoff bestehenden Dispenser ein Autoklavieren insgesamt möglich ist. Im einzelnen wird das später im speziellen Teil der Beschreibung noch weiter erläutert.

Im folgenden wird die Erfindung nun anhand einer lediglich ein bevorzugtes Ausführungsbeispiel darstellenden Zeichnung näher erläutert. In der Zeichnung zeigt
- Fig. 1: in einem Schnitt einen erfindungsgemäßen Dispenser für eine Flüssigkeit im Betätigungszustand "Aufgesaugt",
- Fig. 2: dem Dispenser aus Fig. 1 im Betätigungszustand "Ausgestoßen" und
- Fig. 3: den Dispenser aus Fig. 1 im Betätigungszustand "Reinigung/ Autoklavieren".

Dargestellt ist ein Dispenser für eine Flüssigkeit, also eine Abgabevorrichtung zum Abgeben bestimmter Volumina einer Flüssigkeit. Solche Dispenser sind auch häufig als Dosiergeräte bezeichnet und insbesondere als Flaschenaufsatzdispenser und Büretten bekannt.

Der dargestellte Dispenser weist zunächst eine Zylinder-Kolben-Anordnung mit einem Meßzylinder 1 und einem darin abgedichteten verschiebbaren Kolben 2 auf. Mit dem Kolben 2 verbunden ist eine Ventilanordnung 3 mit einem Einlaßventil 4 und einem Auslaßventil 5 jeweils mit Ventilkörper 6 und Ventilsitz 7.

Die zuvor erläuterten Bauteile sind die für die Lehre der Erfindung notwendigen Teile eines Dispensers. Im übrigen ist es aber bekannt, daß ein Dispenser eine Vielzahl anderer Bauteile aufweist oder aufweisen kann. Das dargestellte Ausfiihrungsbeispiel eines Dispensers zeigt zunächst ein mit dem Kolben 2 verbundenes Handhabungsgehäuse 8 in Form einer aus Kunststoff bestehenden Hülse. Am Handhabungsgehäuse 8 befindet sich im dargestellten Ausführungsbeispiel eine Volumeneinstellung 9, die vertikal verstellbar ist. An der Volumeneinstellung 9 befindet sich noch eine Feinjustierung 10 in Form einer Justierschraube. Die Ventilsitze 7 von Einlaßventil 4 und Auslaßventil 5 sind im dargestellten und bevorzugten Ausführungsbeispiel an einem Ventilkorpus 11 der Ventilanordnung 3 angeordnet.

Insgesamt hat die Ventilanordnung 3, die auf die Flasche aufgesetzt wird, im dargestellten Ausführungsbeispiel auch ein Außengehäuse 12. Dieses umfaßt eine vom Auslaßventil 5 ausgehende Ausstoßleitung 13 mit einem Dosierwinkel 14. Nicht dargestellt ist im übrigen, daß sich an das Einlaßventil 4 noch eine Ansaugleitung anschließt, die normalerweise in die Flasche ragt und in die hier bevorratete Flüssigkeit eintaucht.

Im übrigen darf auf umfangreichen Stand der Technik zu diesen Konstruktionen verwiesen werden, insbesondere auf Stand der Technik, der eine Rückdosierung in die Flasche beschreibt, eine Drehbarkeit des Außengehäuses gegenüber der Flasche mittels eines entkoppelten Tragrings zeigt, etc. (EP 0 652 421 B1; EP 0 542 241 B1; DE 94 22 442 U1; DE 92 18 204 U1).

Wesentlich für das dargestellte Ausführungsbeispiel ist, daß sämtliche von der Flüssigkeit berührten Teile oder Bereiche des Dispensers vollständig aus einem reinen thermoplastischen Kunststoff bestehen oder mit einem reinen thermoplastischen Kunststoff derart beschichtet sind, daß kein Kontakt der Flüssigkeit mit dem mit Kunststoff beschichteten Substrat oder Bestandteilen davon erfolgt. Dazu ist im allgemeinen Teil der Beschreibung schon der wesentliche Hintergrund und Vorteil erläutert worden.

Grundsätzlich kann man vorsehen, daß der reine thermoplastische Kunststoff für alle Teile oder Bereiche der selbe ist. Im dargestellten und bevorzugten Ausführungsbeispiel ist aber realisiert, daß für die verschiedenen Teile oder Bereiche unterschiedliche, der jeweiligen Funktion angepaßte Kunststoffe vorgesehen sind.

Für die meisten Teile des Dispensers wird man vorteilhafterweise thermoplastische Kunststoffe aus den Gruppen der Polyolefine und/oder Fluorpolymere verwenden. Mit diesen Werkstoffen wird eine universelle Chemikalienbeständigkeit und somit vielfältige Verwendbarkeit der Dispenser geschaffen. Insbesondere gilt für den Meßzylinder 1, daß dieser vorzugsweise aus einem Ethylentetrafluorethylen mit hoher Abformgenauigkeit hergestellt wird. Ähnliches gilt für den Kolben 2 sowie den Ventilkorpus 11 etc. Insbesondere für die Ventilkörper 6 eignet sich die Verwendung eines PFA-Kunststoffs.

Für die Möglichkeit, den erfindungsgemäßen Dispenser optimal zu sterilisieren empfiehlt es sich, daß der Kunststoff bzw. die Kunststoffe autoklavierbar ist bzw. sind. Dabei ist es besonders zweckmäßig, daß der Dispenser in seinem zusammengebauten Zustand autoklavierbar ist. Die verwendeten Kunststoffe müssen dabei Eigenschaften aufweisen, die die Funktionstüchtigkeit der Dispenser nach dem Autoklavieren gewährleisten. Im spezifischen Fall sind eine prozessbedingte Dimensionsstabilität und thermische Formbeständigkeit, insbesondere von Teilen die unter mechanischer Spannung stehen, gefordert. Vorzugsweise kommen hierbei Kunststoffe wie PP, PEEK, PEI, ETFE, PVDF und PFA in Frage. Polycarbonate kommen dafür beispielsweise nicht in Frage, da nach wenigen Zyklen Spannungsrisse auftreten.

In einer weiteren Ausführungsform ist vorgesehen, daß auch die nicht von der Flüssigkeit berührten Teile oder Bereiche des Dispensers vollständig aus einem reinen thermoplastischen Kunststoff bestehen oder mit einem reinen thermoplastischen Kunststoff i.w. vollständig beschichtet sind. An mechanisch bewegten Teilen und Bereichen des Dispensers entsteht Abrieb, beispielsweise im Bereich der Ansaugfeder, der beim Aufsetzen des Dispensers zumindest als Staubpartikel in die Flüssigkeit gelangen und diese ungewollt verunreinigen kann. Das wird mit dieser perfektionierten Ausführung des Dispensers vermieden.

Bereits im allgemeinen Teil der Beschreibung ist erläutert worden, daß anorganische Inhaltsstoffe in den Bauteilen des Dispensers, insbesondere in den von der Flüssigkeit berührten Teilen oder Bereichen des Dispensers, insbesondere Metalloxide, für den Bereich der Spurenanalytik problematisch sind.

Daher empfiehlt es sich in diesem Zusammenhang, entsprechend einer bevorzugten Lehre der Erfindung, daß der Kunststoff bzw. die Kunststoffe frei von anorganischen Inhaltsstoffen ist bzw. sind.

Bislang ist immer erläutert worden, daß sämtliche von der Flüssigkeit berührten Teile oder Bereiche des Dispensers vollständig aus einem reinen thermoplastischen Kunststoff bestehen sollen. Nach der zuvor erläuterten Lehre sind auch Farbstoffe und andere anorganische Inhaltsstoffe bei den Kunststoffe wegzulassen. Die ausgewählten Kunststoffe zeichnen sich durch hohe Abformgenauigkeit, eine umfassende Resistenz gegen eine Vielzahl von Chemikalien, durch Temperaturstabilität und Autoklavierbarkeit aus. Elastomere werden ebenso vermieden wie Glas und Keramik.

Weiter ist es zweckmäßig vorzusehen, daß zumindest die von der Flüssigkeit berührten Teile oder Bereiche des Dispensers als Spritzguß-Formteile ausgeführt sind. Dadurch ergibt sich eine weitgehend geschlossene Oberfläche, die die Reinigung erleichtert.

Von besonderer Bedeutung, und zwar auch für sich, ist eine Ausgestaltung des erfindungsmäßen Dispensers, die dadurch gekennzeichnet ist, daß der Meßzylinder 1 und der Ventilkorpus 11 einstückig aus reinem thermoplastischem Kunststoff ausgeführt sind. Das führt zu einer kostengünstigen Herstellung und zur Vermeidung jeglicher Absätze und Fügestellen zwischen dem Kolben 2 und den Ventilen 4, 5.

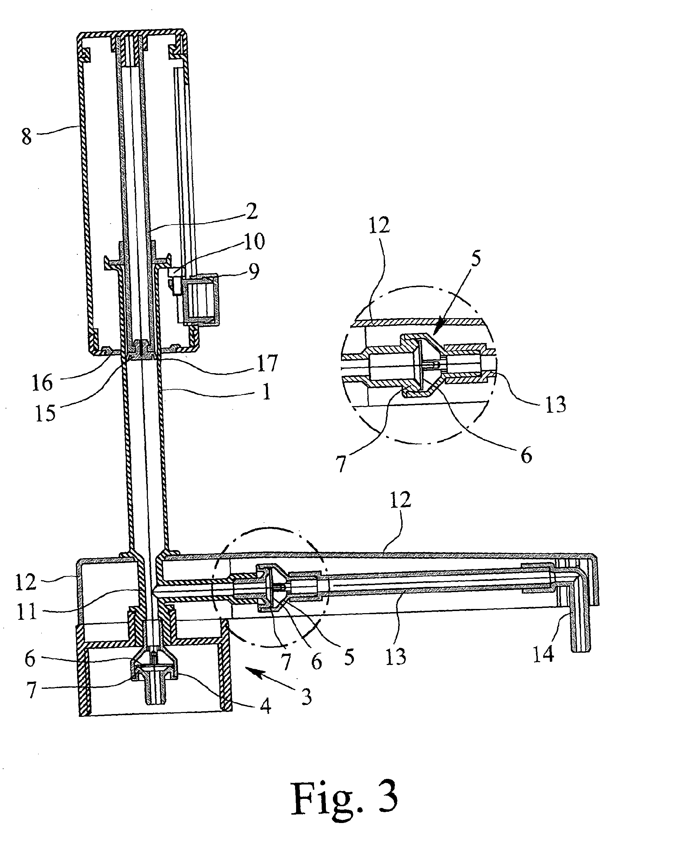

Fig. 3 zeigt im Ausschnit eine weitere Ausrührungsform, bei der der Ventilsitz 7 des Auslaßventils 5 fugenlos und einstückig in einem Herstellvorgang mit dem Ventilkorpus 11 gefertigt worden ist.

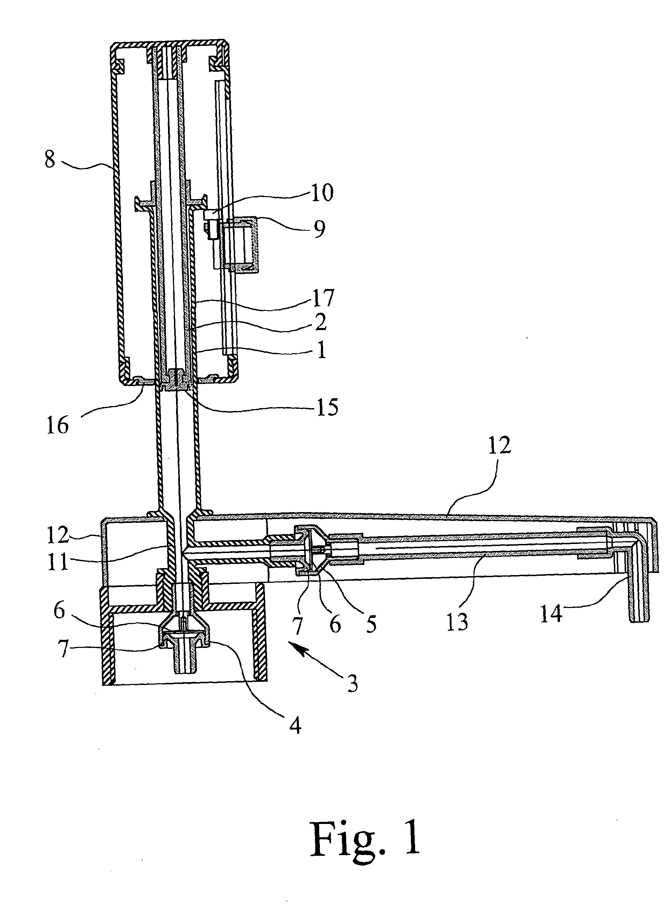

Das in Fig. 1 dargestellte Ausführungsbeispiel zeigt weiter noch eine besonders bevorzugte Ausführungsform dergestalt, daß der Kolben 2 mit einer Kolbendichtlippe in einem in den Kolben 2 eingesteckten Dichtungsteil 15 versehen ist. Im übrigen erkennt man in den Figuren, daß das Handhabungsgehäuse 8 unten mittels eines eingeclipsten Bodens 16 verschlossen ist. Auch insoweit gibt es also nur Steckverbindungen oder Clipsverbindungen, was das Auseinanderbauen und Wiederzusammensetzen und die Reinigung erleichtert.

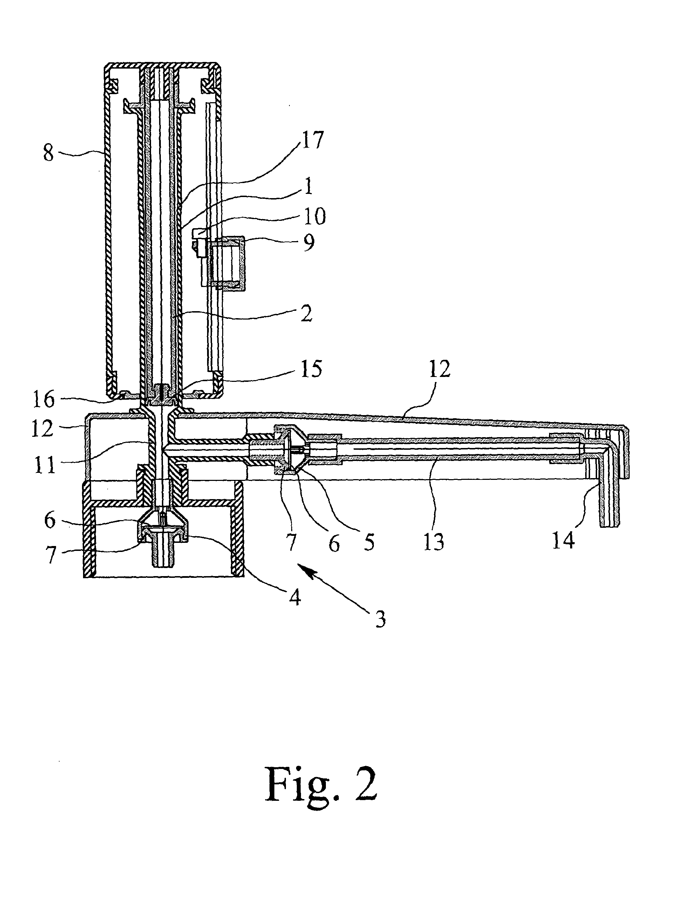

Fig. 1 zeigt den Betätigungszustand "Aufgesaugt" des Dispensers, der Kolben 2 ist bis zu dem von der Volumeneinstellung 9 vorgegebenen Anschlag hochgefahren. Fig. 2 zeigt den Betätigungszustand "Ausgestoßen", der Meßzylinder 1 ist vollständig entleert worden.

Fig. 3 zeigt eine besondere Stellung, die beim Autoklavieren des Dispensers eingenommen werden kann oder sollte. Diese entspricht einer besonders bevorzugten Ausführungsform des beanspruchten Dispensers, die dadurch gekennzeichnet ist, daß der Meßzylinder 1 eine Abstufung 17 zu einem geringfügig größeren Durchmesser aufweist und der Kolben 2 mit seiner Dichtstelle 15 zum Autoklavieren über diese Abstufung 17 hinaus verstellbar ist, so daß die Dichtstelle 15 des Kolbens 2 im Bereich des größeren Durchmessers des Meßzylinders 1 liegt. Dadurch wird erreicht, daß beim Autoklavieren die Dichtwirkung der vorgespannten Kolbendichtung oder bei ggf. weniger nachgiebigem Kolben 2 die elastisch geweitete Zylinderwandung entlastet wird. Es kann so eine plastische Verformung auch beim Autoklavieren verhindert werden, um anschließend die Funktionsfähigkeit des Dispensers im Betrieb wieder in vollem Umfange zu erreichen. Das dargestellte Ausführungsbeispiel zeichnet sich ferner dadurch aus, daß die Volumeneinstellung 9 eine entsprechende Position "Autoklavieren" aufweist.

## Patentansprüche

1. Dispenser für eine Flüssigkeit, insbesondere Flaschenaufsatzdispenser,
mit einer Zylinder-Kolben-Anordnung mit einem Meßzylinder (1) und einem darin abgedichtet verschiebbaren Kolben (2),
mit einer mit dem Kolben (2) verbundenen Ventilanordnung (3) mit einem Einlaßventil (4) und einem Auslaßventil (5), jeweils versehen mit einem Ventilkörper (6) und einem Ventilsitz (7),
**dadurch gekennzeichnet,**
**daß** sämtliche von der Flüssigkeit berührten Teile oder Bereiche des Dispensers vollständig aus einem reinen thermoplastischen Kunststoff bestehen oder, sofern für den beabsichtigten Anwendungszweck ausreichend, mit einem reinen thermoplastischen Kunststoff derart beschichtet sind, daß sie keinen Kontakt mit der Flüssigkeit haben.

2. Dispenser nach Anspruch 1, **dadurch gekennzeichnet, daß** der reine thermoplastische Kunststoff für alle Teile oder Bereiche der selbe ist oder daß für die verschiedenen Teile oder Bereiche unterschiedliche, der jeweiligen Funktion angepaßte Kunststoffe vorgesehen sind.

3. Dispenser nach Anspruch 1 oder 2, **dadurch gekennzeichnet, daß** es sich bei dem Kunststoff oder einem der Kunststoffe um Polyolefine und/oder Fluorpolymere, insbesondere um ein Ethylentetrafluorethylen handelt.

4. Dispenser nach einem der Ansprüche 1 bis 3, **dadurch gekennzeichnet, daß** es sich bei dem Kunststoff der Ventilkörper (6) um ein Perfluoralkoxy-Copolymer (PFA) handelt.

5. Dispenser nach einem der Ansprüche 1 bis 4, **dadurch gekennzeichnet, daß** der Kunststoff bzw. die Kunststoffe autoklavierbar ist bzw. sind, wobei, vorzugsweise, der Dispenser in seinem zusammengebauten Zustand autoklavierbar ist.

6. Dispenser nach einem der Ansprüche 1 bis 5, **dadurch gekennzeichnet, daß** auch die nicht von der Flüssigkeit berührten Teile oder Bereiche des Dispensers vollständig aus einem oder unterschiedlichen reinen thermoplastischen Kunststoff bzw. Kunststoffen bestehen oder jeweils mit einem reinen thermoplastischen Kunststoff i.w. vollständig beschichtet sind.

7. Dispenser nach einem der Ansprüche 1 bis 6, **dadurch gekennzeichnet, daß** der Kunststoff bzw. die Kunststoffe frei von anorganischen Inhaltsstoffen ist bzw. sind.

8. Dispenser nach einem der Ansprüche 1 bis 7, **dadurch gekennzeichnet, daß** zumindest die von der Flüssigkeit berührten Teile oder Bereiche des Dispensers als Spritzguß-Formteile ausgeführt sind.

9. Dispenser nach einem der Ansprüche 1 bis 8, **dadurch gekennzeichnet, daß** die Ventilanordnung (3) einen Ventilkorpus (11) aufweist, an dem die Ventilsitze (7) des Einlaßventils (4) und des Auslaßventils (5) angeordnet sind und daß der Meßzylinder (1) und der Ventilkorpus (11) einstückig aus reinem thermoplastischem Kunststoff ausgerührt sind, wobei, vorzugsweise, zumindest der Ventilsitz (7) des Auslaßventils (5) in den Ventilkorpus (11) integriert ist.

10. Dispenser nach einem der Ansprüche 1 bis 9, **dadurch gekennzeichnet, daß** die verschiedenen Teile des Dispensers, soweit nicht einstückig miteinander ausgeführt, nur über Steckverbindungen oder Clipverbindungen miteinander verbunden sind.

11. Dispenser für eine Flüssigkeit, insbesondere Flaschenaufsatzdispenser,
mit einer Zylinder-Kolben-Anordnung mit einem Meßzylinder (1) und einem darin abgedichtet verschiebbaren Kolben (2),
mit einer mit dem Kolben (2) verbundenen Ventilanordnung (3) mit einem Einlaßventil (4) und einem Auslaßventil (5), jeweils versehen mit einem Ventilkörper (6) und einem Ventilsitz (7),
insbesondere nach einem der Ansprüche 1 bis 10, ganz insbesondere nach Anspruch 5,
**dadurch gekennzeichnet,**
**daß** der Meßzylinder (1) eine Abstufung (17) zu einem geringfügig größeren Durchmesser aufweist und der Kolben (2) mit seiner Dichtstelle (15) zum Autoklavieren über diese Abstufung (17) hinaus verstellbar ist, so daß die Dichtstelle (15) des Kolbens (2) zum Autoklavieren im Bereich des größeren Durchmessers des Meßzylinders (1) liegt, wobei, vorzugsweise, am Meßzylinder (1) eine Volumeneinstellung (9) vorgesehen ist und die Volumeneinstellung (9) eine Position "Autoklavieren" aufweist.
